# FASCICULE DE BREVET EUROPEEN

(11) **EP 1 651 086 B1**
(45) Date de publication et mention de la délivrance du brevet: **11.06.2008**
(21) Numéro de dépôt: 04767751.3
(22) Date de dépôt: 22.07.2004
(51) Int. Cl.: A47J 37/12, A47J 27/00

(54) **RECIPIENT DE CUISSON POUR SOCLE CHAUFFANT OU SOCLE D ALIMENT ATION ELECTRIQUE**
KOCHBEHÄLTER FÜR EINE HEIZBASIS ODER EINE ELEKTRISCHE BASIS
COOKING CONTAINER FOR A HEATING BASE OR AN ELECTRIC BASE

(30) Priorité: 05.08.2003 FR 0309653; 01.09.2003 FR 0310342; 19.03.2004 FR 0402872
(43) Date de publication de la demande: 03.05.2006
(73) Titulaire: SEB S.A., 69130 Ecully (FR)
(72) Inventeur: PRETRE, Nicolas, F-21000 Dijon (FR); PAYEN, Jean-Marc, F-21800 Quetigny (FR)
(74) Mandataire: Kiehl, Hubert
(86) Numéro de dépôt international: PCT/FR2004/001950
(87) Numéro de publication internationale: WO 2005/020772

(56) Documents cités:
- FR-A- 2 655 531
- FR-A- 2 720 254
- FR-A- 2 731 607
- FR-A3- 2 810 868
- GB-A- 2 105 575

## Description

La présente invention concerne le domaine technique des récipients do cuisson.

La présente invention concerne notamment les récipients de cuisson prévus pour être utilisés avec un socle chauffant ou avec un socle d'alimentation électrique.

La présente invention concerne également les appareils électriques de cuisson comportant un récipient de cuisson associé à un socle chauffant ou à un socle d'alimentation électrique.

La présente invention concerne notamment les récipients et appareils de cuisson prévus pour la friture et/ou la cuisson du riz ou des pâtes, mais n'est pas limitée à ces types de cuisson.

La présente invention concerne également les robots culinaires chauffants. Un sous ensemble de cuisson pour robot culinaire chauffant est connu du document FR 2 655 531.

Un récipient de cuisson selon le préambule de la revendication 1 est connu du document US 4 646 717.

Un objet de la présente invention est de proposer un récipient de cuisson prévu pour être utilisé avec un socle chauffant ou un socle d'alimentation électrique, qui puisse être posé sur un support sans entraîner de détérioration dudit support.

Un autre objet de la présente invention est de proposer un récipient de cuisson prévu pour être utilisé avec un socle chauffant ou un socle d'alimentation électrique, qui permette de limiter les risques de brûlure.

Un autre objet de la présente invention est de proposer un récipient de cuisson prévu pour être utilisé avec un socle chauffant ou un socle d'alimentation électrique, qui permette de limiter les déperditions thermiques.

Ces objets sont atteints avec un récipient de cuisson prévu pour être utilisé avec un socle chauffant ou avec un socle d'alimentation électrique selon les caractéristiques de la revendication 1.

Ainsi la cuve peut être disposée sur ou au-dessus du socle chauffant ou du socle d'alimentation électrique, afin de réaliser une cuisson, et le récipient peut être posé sur un support tel qu'une table après la cuisson, sans que le fond de la cuve ne soit en contact avec ledit support. L'espace annulaire entre la paroi latérale de la cuve et la paroi latérale extérieure du boîtier peut communiquer avec l'extérieur par la ou les ouvertures inférieures, lorsque le récipient est retiré du socle. Cette construction permet de plus d'obtenir une paroi latérale extérieure présentant une température modérée après la cuisson, par exemple lors d'un service à table, voire lors de la cuisson. La paroi latérale extérieure permet également de limiter les déperditions thermiques. Lorsque le récipient est retourné dans un lave-vaisselle, cette disposition permet d'évacuer au moins une partie de l'eau entrée par la ou les ouvertures inférieures. Cette disposition permet aussi de réaliser une circulation d'air entre la paroi latérale de la cuve et la paroi latérale extérieure du boîtier, notamment pour les cuissons à température élevée telle que la friture en bain d'huile ou le rissolage. Le couvercle peut être retiré pour le nettoyage du boîtier et de la cuve.

Avantageusement, la paroi latérale extérieure ménage la ou les ouvertures inférieures, cette disposition permettant de simplifier la construction.

Selon un mode de réalisation avantageux, la paroi latérale de la cuve comporte un bord supérieur fixé à la partie supérieure annulaire du boîtier. Le bord supérieur peut notamment être fixé sur ou sous la partie supérieure annulaire du boîtier. Le bord supérieur peut entourer un rebord annulaire. En alternative le boîtier pourrait être fixé à la paroi latérale de la cuve.

Pour faciliter l'écoulement de l'eau lorsque le boîtier occupe une position retournée, la ou les ouies sont agencées dans la partie supérieure du bottier.

La ou les ouies sont ménagées dans la partie supérieure annulaire. Celle disposition permet que la ou les ouies restent à l'intérieur de l'enceinte de cuisson lorsque la partie supérieure du boîtier est fermée par un couvercle.

Avantageusement la ou les ouies débouchent latéralement vers la périphérie du boîtier. Cette disposition permet d'éviter que le contenu de la cuve ne pénètre par la ou les ouies en cas de débordement.

Avantageusement, pour permettre une meilleure isolation thermique, la paroi latérale extérieure enveloppe latéralement la cuve.

Avantageusement encore, pour faciliter l'utilisation du récipient, le boîtier comporte une poignée.

Avantageusement encore, les moyens d'appui sont issus de la paroi latérale extérieure du boîtier. Cette disposition permet de simplifier la construction du récipient.

Avantageusement encore, les moyens d'appui sont susceptibles de reposer sur un support plan, par exemple une table.

Avantageusement encore, les moyens d'appui sont annulaires. Cette disposition permet de limiter les déperditions thermiques.

Selon un mode de réalisation avantageux, le récipient de cuisson comporte des moyens de chauffe solidaires de la cuve, tonnés par au moins un élément chauffant étanche.

L'invention sera mieux comprise à l'étude de deux exemples de réalisation et de quatre variantes, pris à titre nullement limitatif, illustrés dans les figures 1 à 6 annexées, dans lesquelles :
- la figure 1 est une vue en perspective et en éclaté d'un appareil électrique de cuisson comportant un exemple de réalisation d'un récipient de cuisson selon l'invention,
- la figure 2 est une vue en coupe transversale de l'appareil électrique de cuisson montré à la figure 1,
- la figure 3 est une vue en perspective d'une pièce de la partie supérieure du récipient de cuisson illustré aux figures 1 et 2,
- la figure 4 est une vue partielle en coupe radiale et en position retournée de la partie supérieure du récipient de cuisson illustré aux figures 1 et 2,
- la figure 5 est une vue en perspective et en éclaté d'un autre exemple de réalisation d'un récipient de cuisson selon l'invention,
- la figure 6 est une vue en coupe transversale du récipient de cuisson montré à la figure 5, disposé sur un socle de cuisson.

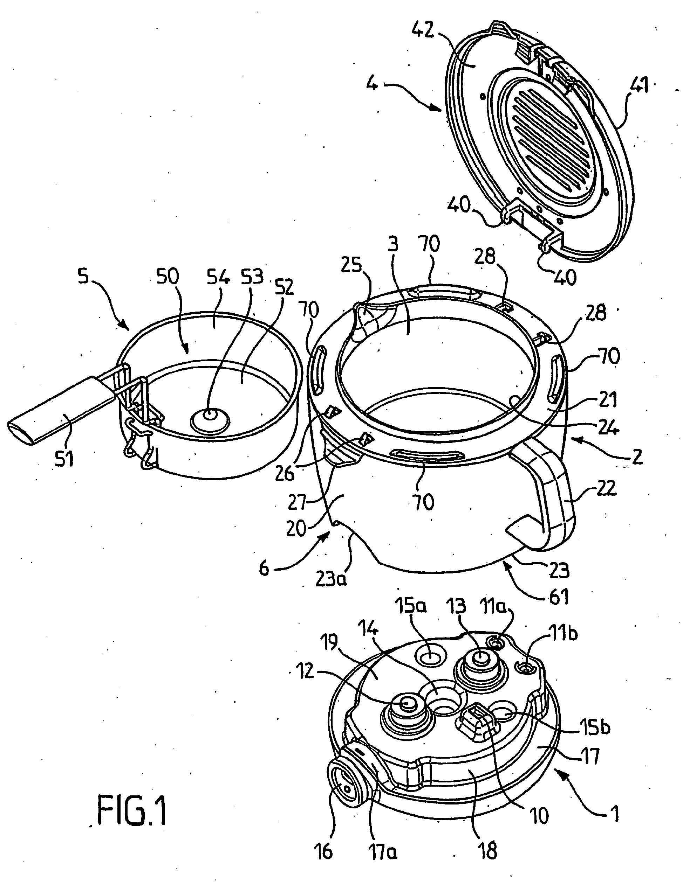

La figure 1 montre un appareil électrique de cuisson, tel qu'une friteuse électrique, comprenant un socle d'alimentation électrique 1, un boîtier 2 monté amovible sur le socle d'alimentation électrique 1, une cuve 3 agencée dans le boîtier 2, un couvercle 4 prévu pour fermer la cuve 3, et un panier de cuisson 5 prévu pour être disposé dans la cuve 3. Le boîtier 2 et la cuve 3 forment un sous-ensemble de cuisson 6 susceptible d'être mis en place sur le socle d'alimentation électrique 1. Le sous-ensemble de cuisson 6 est un récipient de cuisson prévu pour être utilisé avec un socle d'alimentation électrique.

Le socle d'alimentation électrique 1 comporte une face supérieure présentant un connecteur de terre 10 prévu pour être relié à la cuve 3, deux connecteurs électriques 11a, 11b prévus pour alimenter des moyens de chauffe associés à la cuve 3, un premier palpeur 12 associé à un fusible thermique, un deuxième palpeur 13, associé à une sonde de température, une dépression 14 agencée de manière centrale, et deux passages 15a, 15b permettant notamment une circulation d'air entre la face inférieure et la face supérieure du socle d'alimentation électrique 1.

Un bouton de commande 16 permet de régler la température de consigne de la régulation associée à la sonde de température. Le bouton de commande 16 est agencé sur une face latérale du socle d'alimentation électrique 1. La face supérieure du socle d'alimentation électrique 1 présente une zone d'appui 17 prévue pour recevoir le boîtier 2. La zone d'appui 17 est annulaire. La zone d'appui 17 présente un bossage 17a au niveau du bouton de commande 16. La zone d'appui 17 entoure une paroi latérale intérieure 18.

Le connecteur de terre 10, les connecteurs électriques 11 a, 11 b, le premier palpeur 12, le deuxième palpeur 13, la dépression 14, et les deux passages 15a, 15b sont ainsi agencés dans une partie centrale surélevée 19 du socle d'alimentation électrique 1. La paroi latérale intérieure 18 forme un moyen de centrage du boîtier 2 sur le socle d'alimentation électrique 1.

Le boîtier 2 comporte une paroi latérale extérieure 20 prolongée par une partie supérieure annulaire 21. La partie supérieure annulaire 21 s'étend vers l'intérieur du boîtier 2. Le boîtier, 2 comporte une poignée 22. La poignée 22 est issue de la paroi latérale extérieure 20.

Le boîtier 2 est susceptible d'être mis en place sur le socle d'alimentation électrique 1 pour réaliser une opération de cuisson. Le boîtier 2 comporte des moyens d'appui 61 susceptibles de reposer sur le socle d'alimentation électrique 1, ou sur un autre support, notamment sur un support plan. Les moyens d'appui 61 sont formés par un bord inférieur 23 de la paroi latérale extérieure 20. Le bord inférieur 23 est prévu pour reposer sur la zone d'appui 17. Le bord inférieur 23 présente une découpe 23a prévue pour être disposée sur le bossage 17a. La découpe 23a et le bossage 17a permettent d'indiquer le positionnement du boîtier 2 sur le socle d'alimentation électrique 1.

La partie supérieure annulaire 21 du boîtier 2 entoure une paroi annulaire intérieure 24. Le boîtier 2 comporte un bec verseur 25. Le bec verseur 25 est ménagé dans la paroi annulaire intérieure 24.

Des moyens d'accrochage 26 sont prévus pour coopérer avec le couvercle 4. Les moyens d'accrochage 26 sont agencés à l'extérieur de la paroi annulaire intérieure 24. Les moyens d'accrochage 26 sont associés à des moyens de commande 27.

Des ouies 70 sont ménagées sur la partie annulaire supérieure 21. Les ouies 70 présentent chacune une ouverture latérale orientée vers la périphérie du boîtier 2. Les ouies 70 sont prévues pour mettre en communication avec l'extérieur l'espace annulaire situé entre la cuve 3 et la paroi latérale extérieure 20 du boîtier 2. Les ouies 70 permettent l'évacuation de l'eau lorsque le boîtier 2 et la cuve 3 sont disposés retournés dans un lave-vaisselle. Les ouies 70 sont disposées au dessus des moyens d'appui 61 mais sont décalées par rapport à la découpe 23a. Le bec verseur 25 est agencé entre deux ouies 70.

Le couvercle 4 est monté amovible sur le boîtier 2. Le couvercle 4 comporte deux éléments de charnière 40 prévus pour coopérer avec des conformations 28 du boîtier 2. Les conformations 28 sont ménagées dans la partie supérieure annulaire 21. Les conformations 28 sont agencées à l'extérieur de la paroi annulaire intérieure 24. Le couvercle 4 comporte une paroi extérieure 41 et une paroi intérieure 42 formant un pare-vapeur.

Le panier de cuisson 5 comporte un tamis 50 réalisé par exemple en grille métallique, et une poignée 51. Le tamis 50 présente un fond 52 ayant une protubérance 53, et des parois latérales 54.

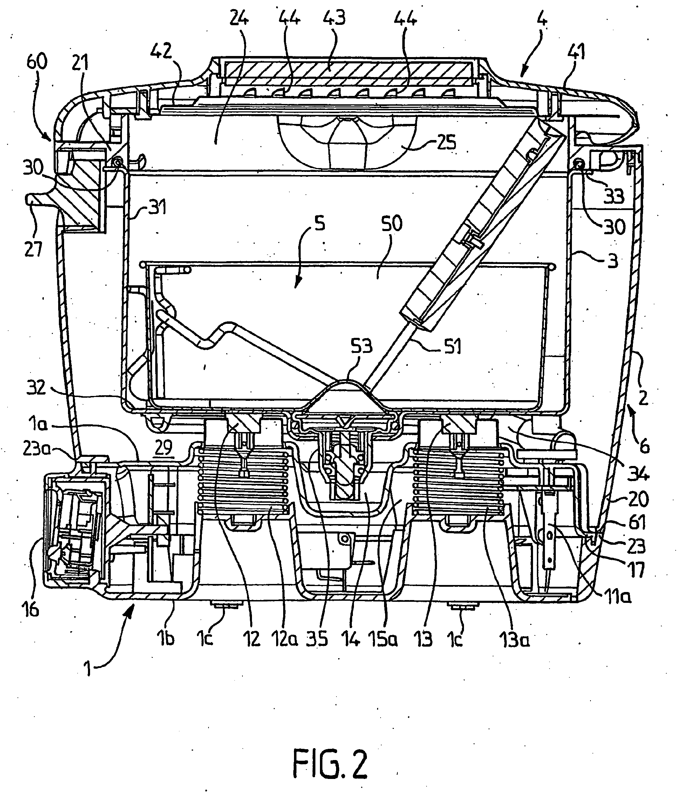

Tel que montré à la figure 2, le socle d'alimentation électrique 1 comporte un capot 1a monté sur une base 1b. La base 1b présente des pieds 1c. Le premier palpeur 12 et le deuxième palpeur 13 sont montés chacun contre un moyen de rappel élastique 12a, 13a. Les passages 15b (non visible à la figure 2) et 15a traversent, le capot 1a et la base 1b en formant des cheminées.

La cuve 3 est avantageusement prévue pour recevoir un bain de cuisson. La cuve 3 présente une paroi latérale 31 et un fond 32. La paroi latérale 31 est prolongée par la paroi annulaire intérieure 24. La paroi latérale 31 comporte un bord supérieur 33. Le bord supérieur 33. est formé par une collerette périphérique s'étendant vers l'extérieur. La cuve 3 est assemblée avec la partie supérieure annulaire 21 du boîtier 2, par exemple par vissage. Un joint 30 est intercalé entre la partie supérieure annulaire 21 et le bord supérieur 33. Le bord supérieur 33 est fixé à la partie supérieure annulaire 21. La paroi latérale 31 de la cuve 3 s'étend à distance de la paroi latérale extérieure 20 du boîtier 2.

Des moyens de chauffe 34 sont solidaires de la cuve 3, pour obtenir un bon échange thermique. Les moyens de chauffe 34 sont par exemple soudés ou brasés sous le fond 32 de la cuve 3. Les moyens de chauffe 34 sont reliés électriquement au socle d'alimentation électrique 1 lorsque le boîtier 2 repose sur le socle d'alimentation électrique 1. Les bornes des moyens de chauffe 34 coopèrent alors avec les connecteurs électriques 11b (non visible à la figure 2) et 11a.

Tel que bien visible sur la figure 2, les moyens de chauffe 34 sont agencés en position supérieure par rapport aux moyens d'appui 61.

Les moyens de chauffe 34 sont avantageusement formés par au moins un élément chauffant étanche susceptible d'être aspergé et/ou immergé dans l'eau. Tel qu'illustré aux figures, les moyens de chauffe 34 sont formés par un élément chauffant blindé. A titre de variante, d'autres types de moyens de chauffe peuvent être envisagés, tels que notamment des éléments chauffants sérigraphiés.

La cuve 3 comporte une protubérance inférieure prévue pour s'engager dans le connecteur de terre 10 lorsque le sous ensemble de cuisson 6 est en place sur le socle de connexion électrique 1.

La cuve 3 est munie d'un dispositif de vidange 35, non décrit en détail car indépendant de la présente invention. Le dispositif de vidange 35 est agencé sous le fond 32 de la cuve 3. Le bord inférieur 23 du boîtier 2 s'étend plus bas que le dispositif de vidange 35. De ce fait le dispositif de vidange 35 s'étend au dessus du plan d'appui du boîtier 2 défini par les moyens d'appui 61. Le dispositif de vidange 35 est logé dans la dépression 14 lorsque le boîtier 2 est en place sur le socle d'alimentation électrique 1. La protubérance 53 vient sur le dispositif de vidange 35 lorsque le panier 5 est en place dans la cuve 3.

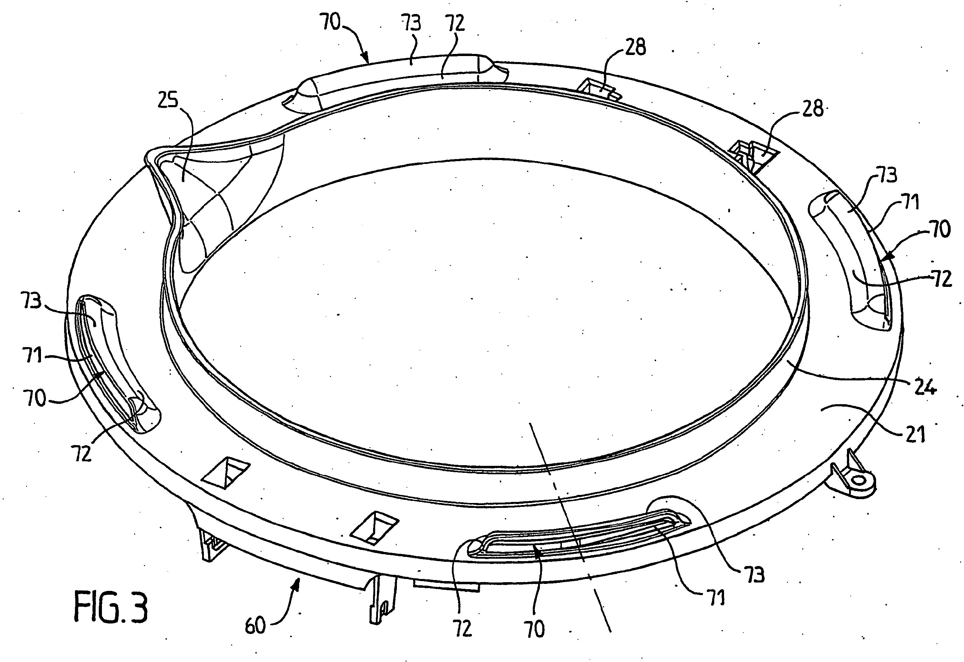

La partie supérieure annulaire 21 du boîtier 2 relie la cuve 3 à la paroi latérale extérieure 20. La partie supérieure annulaire 21 et la paroi annulaire intérieure 24 appartiennent à une bague 60, mieux visible à la figure 3. La bague 60 est par exemple réalisée en matière plastique résistant aux températures élevées du bord supérieur 33 de la cuve 3, ces températures pouvant atteindre 150°C lorsque la cuve 3 est réalisée en aluminium. La bague 60 peut notamment être réalisée en PBT. La bague 60 est assemblée avec la paroi latérale extérieure 20, par exemple par vissage.

La paroi latérale extérieure 20 du boîtier 2 ménage une ouverture inférieure 29. L'espace annulaire entre la paroi latérale 31 de la cuve 3 et la paroi latérale 20 extérieure du boîtier 2 communique avec l'extérieur par l'ouverture inférieure 29. Tel que visible sur la figure 2, l'ouverture inférieure 29 s'étend sous la cuve 3. Le fond 32 de la cuve 3 est ainsi accessible lorsque le boîtier 2 est retiré du socle d'alimentation électrique 1. Plus particulièrement, l'ouverture inférieure 29 s'étend sous les moyens dé chauffe 34. Dans la construction préférée illustrée à la figure 2, le diamètre de l'ouverture inférieure 29 est supérieur au diamètre du fond 32 de la cuve 3.

La paroi latérale extérieure 20 peut être réalisée en matière plastique, notamment en polypropylène. La paroi latérale extérieure 20 enveloppe latéralement la cuve 3 et les moyens de chauffe 34.

La poignée 51 du panier de cuisson peut être repliée pour occuper une position de rangement dans la cuve 3 lorsque le couvercle 4 est fermé, tel que représenté à la figure 2. Le couvercle 4 présente un filtre 43 agencé au dessus de passages 44 ménagés dans la paroi intérieure 42.

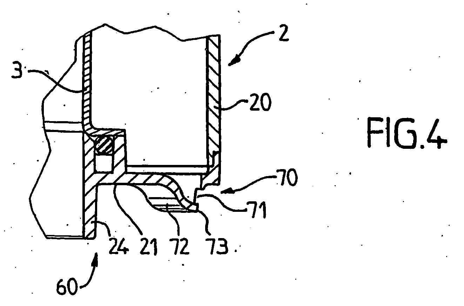

Tel que mieux visible aux figures 3 et 4, chacune des ouies 70 comporte une ouverture 71, une paroi latérale 72 et une paroi supérieure 73. Les ouvertures 71 débouchent latéralement vers la périphérie du boîtier 2.

Les ouies 70 sont prévues pour mettre en communication avec l'extérieur l'espace annulaire situé entre la paroi latérale 31 de la cuve 3 et le boîtier 2.

Le couvercle 4 rabattu sur le boîtier 2 ferme les ouies 70. La circulation d'air entre l'espace annulaire et l'enceinte de cuisson définie par la cuve 3 et le couvercle 4 est ainsi limitée.

L'appareil selon.l'invention fonctionne et s'utilise de la manière suivante.

La mise en place du sous ensemble de cuisson 6 sur le socle d'alimentation électrique 1 permet un contact du premier palpeur 12 et du deuxième palpeur 13 avec la cuve 3, la connexion électrique des moyens de chauffe 34 avec les deux connecteurs électriques 11a, 11b, et une connexion à la terre de la cuve , 3. Le bouton de commande 16 permet de choisir la température du bain de cuisson disposé dans la cuve 3.

L'ouverture inférieure 29 permet le passage de la partie centrale surélevée 19 du socle d'alimentation électrique 1, dans laquelle sont logés les connecteurs électriques 11a, 11b, et le connecteur de terre 10. Ainsi l'ouverture inférieure 29 met en communication les moyens de chauffe 34 avec l'extérieur du boîtier 2.

La poignée 22 permet de manipuler aisément le sous ensemble de cuisson 6. L'absence d'élément de régulation dans le boîtier 2 permet un allégement du sous ensemble de cuisson 6. Le couvercle 4 et le panier 5 peuvent être retirés du sous ensemble de cuisson 6. La déconnexion électrique s'effectue simplement en soulevant le sous ensemble de cuisson 6 du socle d'alimentation électrique 1. Le bain de cuisson contenu dans la cuve 3 peut être vidé par le bec verseur 25 ou par le dispositif de vidange 35.

Le panier 5, le couvercle 4 et le sous ensemble de cuisson 6 peuvent. être lavés par immersion et/ou par aspersion. Notamment, le sous ensemble de cuisson 6 peut être placé en position retournée dans un lave-vaisselle, afin que les jets de lavage puissent atteindre la face intérieure de la cuve 3. Les ouies 70 permettent à l'eau qui rentre par l'ouverture inférieure 29 d'être évacuée. La rétention d'eau dans le sous ensemble de cuisson 6 est ainsi évitée.

Lors d'un fonctionnement anormal en cuisson, par exemple si la cuve 3 a été trop remplie, le bain de cuisson contenu dans la cuve 3 peut déborder et passer par dessus la paroi annulaire intérieure 24. Dans ces conditions, les parois latérales 72, les parois supérieures 73 et les ouvertures 71 débouchant latéralement vers la périphérie du boîtier 2 limitent au maximum les retombées du bain de cuisson sur la partie centrale surélevée 19 du socle d'alimentation électrique 1. En présence du couvercle 4, les ouies 70 sont obturées.

Le sous-ensemble de cuisson 6 peut reposer sur un support plan, du fait que les moyens de chauffe 34 sont agencés en position supérieure par rapport aux moyens d'appui 61.

En variante la régulation agencée dans le socle d'alimentation électrique 1 peut être adaptée pour d'autres types de cuisson, notamment pour la cuisson du riz, ou encore pour la réalisation de préparations mijotées ou rissolées.

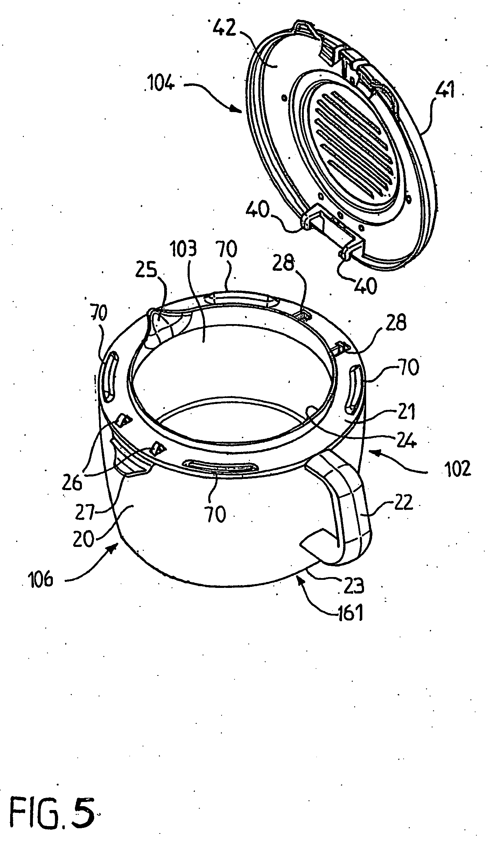

La figure 5 montre un récipient de cuisson selon l'invention, comprenant une cuve 103 agencée dans un boîtier 102. Un couvercle 104 est prévu pour fermer la cuve 103.

Le boîtier 102 diffère du boîtier 2 illustré aux figures 1 à 4 en ce que les moyens d'appui 161. formés par le bord inférieur 23 de la paroi latérale extérieure 20 sont avantageusement annulaires. Les moyens d'appui 161 sont susceptibles de reposer sur un support, notamment sur un support plan.

La cuve 103 diffère de la cuve 3 illustrée aux figures 1 et 2 en ce que le fond 32 est dépourvu d'élément chauffant et de dispositif de vidange.

Plus particulièrement, l'ouverture inférieure 29 du boîtier 102 s'étend sous le fond 32. La paroi latérale extérieure 20 du boîtier 102 enveloppe latéralement la cuve 103.

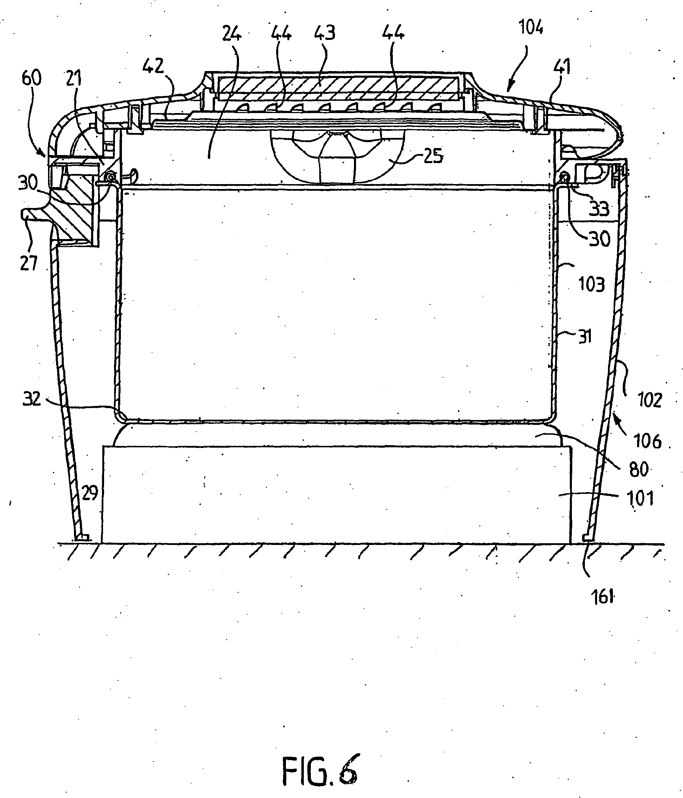

Le boîtier 102 et la cuve 103 forment un sous-ensemble de cuisson 106 susceptible d'être mis en place sur un socle chauffant. Tel qu'illustré à la figure 6, le socle chauffant 101 comporte des moyens de chauffe 80 prévus pour recevoir le fond 32 de la cuve 103.

Le récipient de cuisson selon l'invention formé par le sous ensemble de cuisson 106 illustré aux figures 5 et 6 s'utilise de la manière suivante.

Lorsque le sous-ensemble de cuisson 106 est mis en place sur le socle chauffant 101, le fond 32 repose sur les moyens de chauffe 80. Le chauffage de la cuve 103 s'effectue au moins partiellement par conduction, Pendant la cuisson, le sous-ensemble de cuisson 106 ne repose pas nécessairement sur les moyens d'appui 161. Lorsque le sous-ensemble de cuisson 106 est déplacé hors du socle chauffant 101, le sous-ensemble de cuisson 106 repose sur les moyens d'appui 161. Le fond 32 est à distance du support recevant le sous-ensemble de cuisson 106.

Le sous-ensemble de cuisson 106 peut être placé en position retournée dans un lave-vaisselle, afin que les jets de lavage puissent atteindre la face intérieure de la cuve 103. Les ouies 70 permettent à l'eau qui rentre par l'ouverture inférieure 29 d'être évacuée. La rétention d'eau dans le sous ensemble de cuisson 106 est ainsi évitée.

Le sous ensemble de cuisson 106 peut également être utilisé avec un socle chauffant comportant des moyens de chauffe par rayonnement. Dans ce cas, un contact entre le fond 32 et les moyens de chauffe n'est pas indispensable. Le sous ensemble de cuisson 106 repose sur les moyens d'appui 161. Les moyens de chauffe du socle chauffant sont disposés dans l'ouverture 29.

A titre de variante complémentaire, la paroi latérale extérieure du boîtier n'est pas nécessairement réalisée en une seule pièce. La paroi latérale extérieure du boîtier n'est pas nécessairement réalisée en matière plastique.

A titre de variante complémentaire, l'appareil peut comporter différents types d'ouies présentant des constructions différentes.

A titre de variante complémentaire, le boîtier pourrait ne comporter qu'une seule ouie.

A titre de variante complémentaire, les parois latérales 72 et/ou les parois supérieures 73 des ouies 70 pourraient être supprimées.

A titre de variante complémentaire, l'ouverture inférieure 29 peut s'étendre au moins partiellement sous la cuve, sans nécessairement dégager tout le fond 32 de la cuve.

A titre de variante complémentaire, l'ouverture inférieure 29 pourrait être placée latéralement par rapport à la cuve 3.

A titre de variante complémentaire, le boîtier peut présenter une pièce rapportée sous la paroi latérale extérieure. La paroi latérale extérieure comporte l'ouverture inférieure 29. Le boîtier présente alors une autre ouverture inférieure.

A titre de variante complémentaire, le boîtier peut comporter plusieurs ouvertures inférieures. Par exemple, une première ouverture inférieure peut être agencée sous les bornes des moyens de chauffe 34 et une deuxième ouverture inférieure peut être agencée sous la protubérance inférieure de la cuve 3.

A titre de variante complémentaire les moyens d'appui peuvent être disposés plus bas que la ou les ouvertures inférieures.

A titre de variante complémentaire, les moyens d'appui ne sont pas nécessairement issus de la paroi latérale extérieure. Les moyens d'appui peuvent notamment appartenir à une ou plusieurs pièces du boîtier rapportées sous la paroi latérale extérieure.

A titre de variante complémentaire, au moins l'une des bornes des moyens de chauffe 34 et/ou la protubérance inférieure de la cuve 3 peuvent sortir par la ou les ouvertures inférieures.

A titre de variante complémentaire, le socle d'alimentation électrique 1 peut comporter un interrupteur actionné par le boîtier lorsque ledit boîtier est mis en place sur le socle d'alimentation électrique. Cette disposition permet de limiter les risques d'arc électrique entre les moyens de chauffe 34 et les connecteurs électriques 11a, 11b.

A titre de variante complémentaire, le boîtier peut comporter une ou plusieurs poignées. Le boîtier peut aussi comporter une anse de versement.

A titre de variante complémentaire, une ou plusieurs entretoises peuvent être prévues entre la paroi latérale extérieure du boîtier et la paroi latérale de la cuve, notamment pour les appareils prévus pour des cuissons dans l'eau ou à la vapeur, tels que par exemple les cuiseurs à riz ou les cuiseurs vapeur. Les entretoises peuvent être par exemple constituées par des nervures issues de la face interne de la paroi latérale extérieure du boîtier. Les entretoises permettent de centrer la cuve et de contribuer à limiter la déformation de la paroi latérale extérieure du boîtier.

A titre de variante complémentaire, d'autres configurations d'assemblage entre le boîtier et la cuve peuvent être envisagées. Le boîtier peut également être démontable ou amovible par rapport à la cuve.

La présente invention n'est nullement limitée aux exemples de réalisation décrits et à leurs variantes, mais englobé de nombreuses modifications dans le cadre des revendications.

## Revendications

1. Récipient de cuisson prévu pour être utilisé avec un socle chauffant (101) ou avec un socle d'alimentation électrique (1), comprenant une cuve (3 ; 103) agencée dans un boîtier (2 ; 102) et un couvercle (4 ; 104) monte amovible sur le boîtier (2 ; 102), la cuve (3 ; 103) présentant un tond (32) et une paroi latérale (31), la paroi latérale (31) de la cuve (3 ; 103) s'étendant à distance d'une paroi latérale extérieure (20) du boîtier (2 ; 102) on ménageant un espace annulaire, une partie supérieure annulaire (21) du boîtier (2 ; 102) reliant la paroi latérale (31) de la cuve (3 ; 103) à la paroi latérale extérieure (20) du boîtier (2 ; 102), le boîtier (2 ; 102) présentant au moins une ouverture inférieure (29) prévue pour recevoir une partie supérieure du socle chauffant (101) ou du socle d'alimentation électrique (1), l'espace annulaire communiquant avec l'extérieur par ladite ou lesdites ouverture(s) inférieure(s) (29), ladite ou lesdites ouverture(s) inférieure(s) (29) étant agencées en dessous du fond (32) de la cuve (3 ; 103), au moins une ouie (70) étant agencée dans la partie supérieure annulaire (21) du boîtier (2 ; 102) entre la paroi latérale (31) de la cuve (3 ; 103) et ladite ou lesdites ouverture(s) inférieure(s) (29), le fond (32) de la cuve (3 ; 103) étant agencé à distance du boîtier (2 ; 102), le boîtier (2; 102) présentant des moyens d'appui (61 ; 161) agencés en dessous du fond (32) de la cuve (3 ; 103), **caractérisé en ce que** le couvercle (4 ; 104) rabattu sur le boîtier (2 ; 102) ferme ladite ou lesdites ouie(s) (70).

2. Récipient de cuisson selon la revendication 1, **caractérisé en ce que** la paroi latérale extérieure (20) ménage la ou les ouverture(s) intérieure(s) (29).

3. Récipient de cuisson selon l'une des revendications 1 ou 2, **caractérisé en ce que** la paroi latérale (31) de la cuve (3 ; 103) comporte un bord supérieur (33) fixé la la partie supérieure annulaire (21) du boîtier (2 ; 102).

4. Récipient de cuisson selon l'une des revendications 1 à 3, **caractérisé en ce que** la ou les ouies (70) débouchent latéralement vers la périphérie du boîtier (2 ; 102).

5. Récipient de cuisson selon l'une des revendications 1 à 4 **caractérisé en ce que** la paroi latérale extérieure (20) enveloppe latéralement la cuve (3 ; 103).

6. Récipient de cuisson selon l'une des revendications 1 à 5 **caractérisé en ce que** le boiter (2 ; 102) comporte une poignée (22).

7. Récipient de cuisson selon l'une des revendications 1 à 6, **caractérisé en ce que** les moyens d'appui (161) sont issus de la paroi latérale extérieure (20).

8. Récipient de cuisson selon l'une des revendications 1 à 7, **caractérisé en ce que** les moyens d'appui (161) sont susceptibles de reposer sur un support plan.

9. Récipient de cuisson selon l'une des revendications 1 à 8, **caractérisé en ce que** les moyens d'appui (161) sont annulaires.

10. Récipient dé cuisson selon l'une des revendications 1 à 9 **caractérisé en ce que** la paroi latérale extérieure (20) est réalisée en matière plastique.

11. Récipient de cuisson selon l'une des revendications 1 à 10 **caractérisé en ce que** la couverte (4 ; 104) présente un filtre (43) agencé au dessus de passages (44) ménages dans une paroi intérieure (42).

12. Récipient de cuisson selon l'une des revendications 1 à 11 **caractérisé en ce qu'**il comporte des moyens de chauffe (34) solidaires de la cuve (3) formés par au moins un élément chauffant étanche.

13. Appareil électrique de cuisson comportant un socle d'alimentation électrique (1) et un sous-ensemble de cuisson (6), **caractérisé en ce que** le sous-ensemble de cuisson (6) est un récipient de cuisson selon la revendication 12.

14. Appareil électrique de cuisson comportant un socle chauffant (101) et un sous-ensemble de cuisson (106), **caractérisé en ce que** le sous-ensemble de cuisson (108) est un récipient de cuisson selon l'une des revendications 1 à 11.

## Claims

1. A cooking vessel designed to be used with a hot stand (101) or with an electrical power supply stand (1), said cooking vessel comprising a bowl (3; 103) arranged in a casing (2; 102) and a lid (4; 104) removably mounted on the casing (2; 102), the bowl (3; 103) having a bottom (32) and a side wall (31), the side wall (31) of the bowl (3, 103) extending at some distance from an outer side wall (20) of the casing (2; 102) by forming an annular space, an annular top portion (21) of the casing (2; 102) connecting the side wall (31) of the bowl (3; 103) to the outer side wall (20) of the casing (2; 102), the casing (2; 102) presenting at least one bottom opening (29) designed to receive a top portion of the hot stand (101) or of the electrical power supply stand (1), the annular space communicating with the outside via said bottom opening(s) (29), said bottom opening(s) (29) being arranged below the bottom (32) of the bowl (3; 103), at least one vent (70) being arranged in the annular top portion (21) of the casing (2; 102) between the side wall (31) of the bowl (3; 103) and said bottom opening(s) (29), the bottom (32) of the bowl (3; 103) being arranged at some distance from the casing (2; 102), the casing (2; 102) having abutment means (61; 161) arranged below the bottom (32) of the bowl (3; 103), said cooking vessel being **characterized in that** the lid (4; 104) shut on the casing (2; 102) closes said vent(s) (70).

2. A cooking vessel according to claim 1, **characterized in that** the outer side wall (20) forms the bottom opening(s) (29).

3. A cooking vessel according to claim 1 or claim 2, **characterized in that** the side wall (31) of the bowl (3; 103) has a top edge (33) fastened to the annular top portion (21) of the casing (2; 102).

4. A Cooking vessel according to any one of claims 1 to 3, **characterized in that** the vent(s) (70) open out laterally towards the periphery of the casing (2; 102).

5. A cooking vessel according to any one of claims 1 to 4, **characterized in that** the outer side wall (20) surrounds the bowl (3; 103) laterally.

6. A cooking vessel according to any one of claims 1 to 5, **characterized in that** the casing (2; 102) is provided with a handle (22).

7. A cooking vessel according to any one of claims 1 to 6, **characterized in that** the abutment means (161) are formed integrally with the outer side wall (20).

8. A cooking vessel according to any one of claims 1 to 7, **characterized in that** the abutment means (161) are suitable for resting on a plane supporting surface.

9. A cooking vessel according to any one of claims 1 to 8, **characterized in that** the abutment means (161) are annular.

10. A cooking vessel according to any one of claims 1 to 9, **characterized in that** the outer side wall (20) is made of a plastics material.

11. A cooking vessel according to any one of claims 1 to 10, **characterized in that** the lid (4; 104) has a filter (43) arranged above passages (44) formed in an inner wall (42).

12. A cooking vessel according to any one of claims 1 to 11, **characterized in that** it further comprises heater means (34) that are secured to the bowl (3) and that are formed by at least one waterproof heater element.

13. An electric cooking appliance including an electrical power supply stand (1) and a cooking subassembly (6), said electric cooking appliance being **characterized in that** the cooking subassembly (6) is a cooking vessel according to claim 12.

14. An electric cooking appliance including a hot stand (101) and a cooking subassembly (106), said electric cooking appliance being **characterized in that** the cooking subassembly (106) is a cooking vessel according to any one of claims 1 to 11.

## Patentansprüche

1. Kochbehälter, der dazu vorgesehen ist, mit einem Heizsockel (101) oder einem Sockel zur elektrischen Versorgung (1) verwendet zu werden, mit einer Wanne (3; 103), die in einem Gehäuse (2; 102) angeordnet ist, und einem Deckel (4; 104), der auf dem Gehäuse (2; 102) abnehmbar angebracht ist, wobei die Wanne (3; 103) einen Boden (32) und eine Seitenwand (31) aufweist, wobei sich die Seitenwand (31) der Wanne (3; 103) im Abstand zu einer äußeren Seitenwand (20) des Gehäuses (2; 102) erstreckt und einen ringförmigen Raum ausbildet, wobei ein ringförmiger oberer Teil (21) des Gehäuses (2; 102) die Seitenwand (31) der Wanne (3; 103) mit der äußeren Seitenwand (20) des Gehäuses (2; 102) verbindet, wobei das Gehäuse (2; 102) mindestens eine untere Öffnung (29) aufweist, die zum Aufnehmen eines oberen Teils des Heizsockels (101) oder des Sockels zur elektrischen Versorgung (1) aufweist, wobei der ringförmige Raum mit dem Außenraum über die untere(n) Öffnung(en) (29) verbunden ist, wobei die untere(n) Öffnung(en) (29) unterhalb des Bodens (32) der Wanne (3; 103) angeordnet ist/sind, wobei mindestens ein Lufteinlaß (70) im oberen ringförmigen Teil (21) des Gehäuses (2; 102) zwischen der Seitenwand (31) der Wanne (3; 103) und der untere(n) Öffnung(en) (29) angeordnet ist, wobei der Boden (32) der Wanne (3; 103) Stützmittel (61; 161) aufweist, die unterhalb des Bodens (32) der Wanne angeordnet sind, **dadurch gekennzeichnet, dass** der auf dem Gehäuse (2; 102) umgeklappte Deckel (4; 104) den Einlaß oder die Einlässe (70) verschließt.

2. Kochbehälter nach Anspruch 1, **dadurch gekennzeichnet, dass** die untere(n) Öffnung(en) (29) in der äußeren Seitenwand (20) ausgebildet ist/sind.

3. Kochbehälter nach einem der Ansprüche 1 oder 2, **dadurch gekennzeichnet, dass** die Seitenwand (31) der Wanne (3; 103) einen oberen Rand (33) aufweist, der am oberen ringförmigen Teil (21) des Gehäuses (2; 102) befestigt ist.

4. Kochbehälter nach einem der Ansprüche 1 bis 3, **dadurch gekennzeichnet, dass** der Einlaß oder die Einlässe (70) seitlich zum Rand des Gehäuses (2; 102) münden.

5. Kochbehälter nach einem der Ansprüche 1 bis 4, **dadurch gekennzeichnet, dass** die äußere Seitenwand (20) die Wanne (3; 103) seitlich umhüllt.

6. Kochbehälter nach einem der Ansprüche 1 bis 5, **dadurch gekennzeichnet, dass** das Gehäuse (2; 102) einen Griff (22) aufweist.

7. Kochbehälter nach einem der Ansprüche 1 bis 6, **dadurch gekennzeichnet, dass** die Stützmittel (161) aus der äußeren Seitenwand (20) hervorgehen.

8. Kochbehälter nach einem, der Ansprüche 1 bis 7, **dadurch gekennzeichnet, dass** die Stützmittel (161) auf einem ebenen Träger aufliegen können.

9. Kochbehälter nach einem der Ansprüche 1 bis 8, **dadurch gekennzeichnet, dass** die Stützmittel (161) ringförmig sind.

10. Kochbehälter nach einem der Ansprüche 1 bis 9, **dadurch gekennzeichnet, dass** die äußere Seitenwand (20) aus Kunststoff besteht.

11. Kochbehälter nach einem der Ansprüche 1 bis 10, **dadurch gekennzeichnet, dass** der Deckel (4; 104) einen Filter (43) aufweist, der über Durchgängen (44) angeordnet ist, die in einer Innenwand (42) ausgebildet sind.

12. Kochbehälter nach einem der Ansprüche 1 bis 11, **dadurch gekennzeichnet, dass** er mit der Wanne (3) fest verbundene Heizmittel (34) aufweist, die durch mindestens ein dichtes Heizelement gebildet sind.

13. Elektrisches Kochgerät mit einem Sockel zur elektrischen Versorgung (1) und einer Kochunterbaugruppe (6), **dadurch gekennzeichnet, dass** die Kochunterbaugruppe (6) ein Kochbehälter nach Anspruch 12 ist.

14. Elektrisches Kochgerät mit einem Heizsockel (101) und einer Kochunterbaugruppe (106), **dadurch gekennzeichnet, dass** die Kochunterbaugruppe (106) ein Kochbehälter nach einem der Ansprüche 1 bis 11 ist.
